# EUROPEAN PATENT APPLICATION

(11) **EP 1 280 031 A2**
(43) Date of publication of application: **29.01.2003**
(21) Application number: 02007361.5
(22) Date of filing: 08.04.2002
(51) Int. Cl.: G05D 23/13

(54) **Valve element for mixing and flow-rate adjustment in faucets and the like**

(30) Priority: 23.07.2001 IT MI011579
(71) Applicant: Nember, Oscar, 25050 Paderno Franciacorta (Brescia) (IT)
(72) Inventor: Nember, Oscar, 25050 Paderno Franciacorta (Brescia) (IT)
(74) Representative: Modiano, Guido, Dr.-Ing.

(57) **Abstract**

A valve element (1) for mixing and flow-rate adjustment in faucets and the like, comprising a thermostat-controlled cartridge (2) for adjusting the mixing between hot water and cold water which can be accommodated in a chamber (20) formed in a faucet body (21) and is provided with ports (22,23) for connection to a cold water inlet duct and to a hot water inlet duct. A bushing (30) for controlling the connecting ports is interposed between the thermostat-controlled cartridge (2) and the chamber (20) and is able to perform an axial translational motion in the chamber (20) in order to adjust the flow-rate when a bonnet valve body (8) of the thermostat-controlled cartridge is turned.

## Description

The present invention relates to a valve element for mixing and flow-rate adjustment in faucets and the like.

It is known that thermostat-controlled cartridges have long been commercially available which automatically adjust the mixing between hot and cold water in order to obtain a preset temperature of the mixed water.

When using these thermostat-controlled cartridges, it was necessary to use an additional valve element that adjusted the flow-rate, accordingly entailing the need to have an additional valve body.

In order to try to overcome these drawbacks, valve elements have already been introduced commercially which have a thermostat-controlled cartridge for adjusting the mixing between hot and cold water and furthermore allow flow-rate adjustment, but these valve elements have been found to be very complicated and bulky and furthermore have required a complete redesign of the thermostat-controlled cartridge.

The aim of the invention is to eliminate the above-described problems, by providing a valve element for mixing and flow-rate adjustment in faucets and the like that allows to use the conventional thermostat-controlled cartridge for mixing adjustment, furthermore achieving flow-rate adjustment with the simple addition of an accessory.

Within this aim, an object of the invention is to provide a valve element that allows to perform mixing and flow-rate adjustment with actuation systems that are extremely practical and simple in a particularly compact valve environment.

Another object of the present invention is to provide a valve element that thanks to its particular constructive characteristics is capable of giving the greatest assurances of reliability and safety in use.

Another object of the present invention is to provide a valve element that can be easily obtained starting from commonly commercially available elements and materials and is furthermore competitive from a merely economical standpoint.

This aim and these and other objects that will become better apparent hereinafter are achieved by a valve element for mixing and flow-rate adjustment in faucets and the like, according to the present invention, characterized in that it comprises a thermostat-controlled cartridge for adjusting the mixing between hot water and cold water which can be accommodated in a chamber formed in a faucet body and is provided with ports for connection to a cold water inlet duct and to a hot water inlet duct, a bushing for controlling said ports being interposed between said thermostat-controlled cartridge and said chamber and being able to perform an axial translational motion in said chamber in order to adjust the flow-rate when a bonnet valve body of said thermostat-controlled cartridge is turned.

Further characteristics and advantages will become better apparent from the following detailed description of a preferred but not exclusive embodiment of a valve element for mixing and flow-rate adjustment in faucets and the like, illustrated only by way of non-limitative example in the accompanying drawings, wherein:
Figure 1 is a view of the valve element according to the invention, schematically accommodated within a faucet body and in the open position;
Figure 2 is a view of the valve element, schematically accommodated in a faucet body and in the closed position;
Figure 3 is an exploded sectional view of the thermostat-controlled cartridge and of the control bushing;
Figure 4 is a schematic exploded perspective view of the thermostat-controlled cartridge and of the control bushing.

With reference to the figures, the valve element for mixing and flow-rate adjustment in faucets and the like, according to the invention, generally designated by the reference numeral 1, comprises a thermostat-controlled cartridge 2 for adjusting the mixing between hot water and cold water, which is generally substantially conventional.

In particular, the cartridge 2 is provided with the conventional sensor 3, which is connected to a sensor holder 4, which is subjected to translational motion in order to control the hot water inlet 5 and the cold water inlet 6.

The sensor is accommodated within a bonnet valve body 8, from which a bonnet valve rod 9 protrudes axially; the rod can rotate so as to vary the setting of the elastic means 10 that act on the supporting element 4 of the sensor that controls the ports 5 and 6.

With this type, the thermostat-controlled cartridge is of a per se conventional type and is accommodated inside a chamber 20 formed in a faucet body, generally designated by the reference numeral 21. The faucet body 21 has ports 22 for connection to the cold water inlet duct and ports 23 for connection to a hot water inlet duct.

The particularity of the invention is constituted by the fact that between the thermostat-controlled cartridge 2 and the chamber 20 there is a bushing 30 for controlling the ports 5 and 6.

In greater detail, the bushing 30 is provided peripherally with O-rings 31 for forming a seal on the surface of the chamber 20, which delimit intermediate ports 32 which can be selectively arranged so as to be connected to the cold water inlet port 22.

Furthermore, the axial end of the bushing controls the hot water inlet port 23.

The bushing 30 can perform an axial translational motion in said chamber in order to adjust the flow-rate.

In order to adjust the flow-rate, there is an interactive connection between the bonnet valve body 8 and the bushing, and said connection is provided by means of cam-like protrusions 40 which are formed in the bonnet valve body 8 and can engage helical slots 41 formed on the internal surface of the bushing.

The bushing 30 is prevented from rotating by the presence of an axial slot 44 formed at the free edge and engaged by a pin 45 rigidly coupled to the faucet body 21.

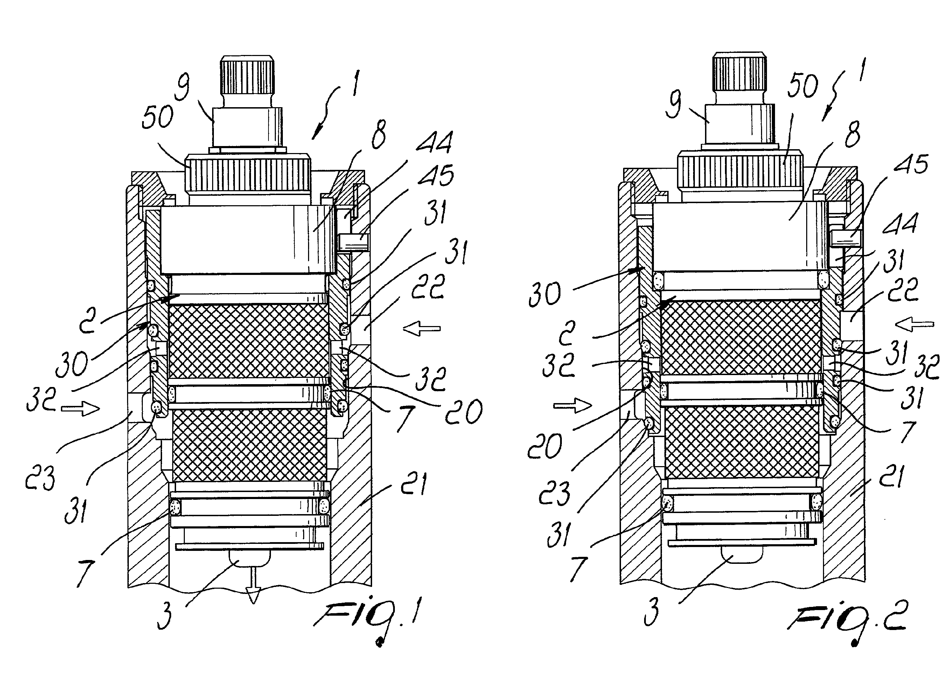

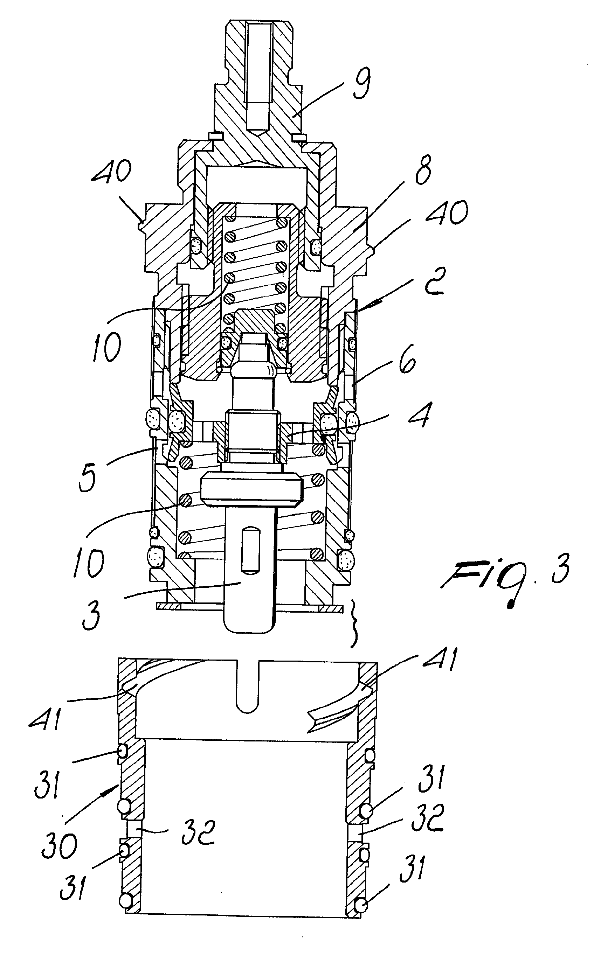

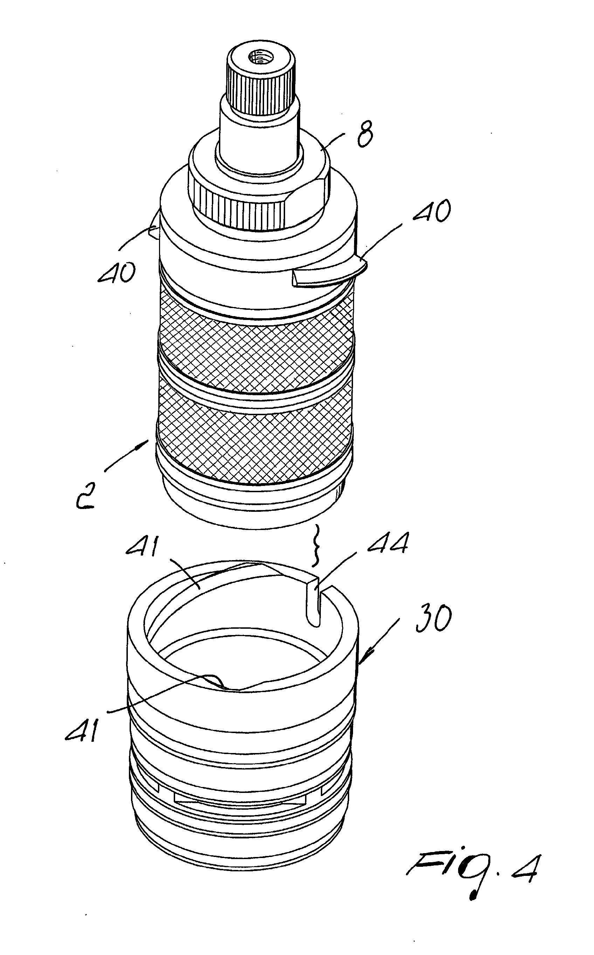

The rotation of the bonnet valve body forces the translational motion of the bushing 30, so that as shown in Figures 1 and 2 it is possible to arrange it in the open position so that the intermediate ports 32 are connected to the cold water inlet port 22 and also connected to the port 6 for the inflow of cold water into the thermostat-controlled cartridge.

The lower end of the bushing leaves open the hot water inlet port 23, which is substantially arranged at the port 5 formed in the cartridge, and therefore there is a free flow of water toward the cartridge, which engages hermetically the inside of the bushing by virtue of the presence of corresponding annular gaskets 7 provided on the outer body of the cartridge.

The bonnet valve body has, in an upward region, a knurled portion 50 which allows to apply a flow-rate adjustment ring, while a knob for adjusting mixing can be coupled to the rod 9.

With the above-described solution it is therefore possible to have a thermostat-controlled cartridge which, in addition to adjusting the mixing in order to obtain a presettable temperature, allows to adjust the flow-rate with an element that is directly integrated and connected to said cartridge, which does not have to undergo particular modifications for use in said valve element.

The invention thus conceived is susceptible of numerous modifications and variations, all of which are within the scope of the appended claims.

All the details may furthermore be replaced with other technically equivalent elements.

In practice, the materials used, as well as the contingent shapes and dimensions, may be any according to requirements.

The disclosures in Italian Patent Application No. MI2001A001579 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A valve element for mixing and flow-rate adjustment in faucets, **characterized in that** it comprises a thermostat-controlled cartridge for adjusting the mixing between hot water and cold water which can be accommodated in a chamber formed in a faucet body and is provided with ports for connection to a cold water inlet duct and to a hot water inlet duct, a bushing for controlling said ports being interposed between said thermostat-controlled cartridge and said chamber and being able to perform an axial translational motion in said chamber in order to adjust the flow-rate when a bonnet valve body of said thermostat-controlled cartridge is turned.

2. The valve element according to claim 1, **characterized in that** it comprises, on said bushing, O-rings which delimit intermediate ports that can be connected to said cold water inlet port, an O-ring being provided at an axial end of said bushing and forming a seal with an internal surface of said faucet body in order to control said hot water inlet port.

3. The valve element according to claim 1, **characterized in that** it comprises an interactive connection between the bonnet valve body of said thermostat-controlled cartridge and said bushing for the axial translational motion of said bushing when said bonnet valve body is turned.

4. The valve element according to claim 3, **characterized in that** said interactive connection comprises cam-like protrusions formed on said bonnet valve body which can engage helical slots formed on an internal surface of said bushing, means being further provided in order to prevent a rotation of said bushing about its own axis.

5. The valve element according to claim 4, **characterized in that** said means for preventing the rotation of said bushing comprise an axial slot formed at a free edge of said bushing and a pin that is rigidly coupled to said faucet body.

6. The valve element according to claim 1, **characterized in that** said bonnet valve body has, in an upward region, a knurled portion for the application of a flow-rate adjustment ring, coaxially to which there is a rod to which a knob for mixing adjustment can be coupled.
